Europäisches Patentamt

European Patent Office

Office européen des brevets

(19)

(11) **EP 0 883 062 A1**

(12) ## DEMANDE DE BREVET EUROPEEN

(43) Date de publication:
09.12.1998 Bulletin 1998/50

(51) Int. Cl.⁶: **G06F 11/00**

(21) Numéro de dépôt: 98401190.8

(22) Date de dépôt: 18.05.1998

(84) Etats contractants désignés:
AT BE CH CY DE DK ES FI FR GB GR IE IT LI LU
MC NL PT SE
Etats d'extension désignés:
AL LT LV MK RO SI

(30) Priorité: 05.06.1997 FR 9706967

(71) Demandeur:
ALCATEL ALSTHOM COMPAGNIE GENERALE
D'ELECTRICITE
75008 Paris (FR)

(72) Inventeur: **Perron, Olivier**
95130 Franconville (FR)

(74) Mandataire:
**El Manouni, Josiane et al**
**Compagnie Financiere Alcatel,**
**DPI,**
**30, avenue Kléber**
**75116 Paris (FR)**

(54) **Dispositif de retouche de programme de commande dans un processeur**

(57)    L'invention concerne un dispositif de retouche de programme de commande dans un processeur qui exécute un programme de commande stocké dans une mémoire permanente, et a accès à une pluralité de routines de retouche. Ce dispositif comprend: des moyens de stockage d'adresses de déroutement, associées chacune à l'adresse d'une routine de retouche; des moyens (31) de comparaison de l'adresse du programme avec les adresses de déroutement; et des moyens (33) de déroutement du programme de commande, en cas de comparaison positive, vers la routine de retouche dont l'adresse est associée à l'adresse de déroutement ayant fait l'objet de la comparaison positive. Selon l'invention, chaque adresse de déroutement est associée à l'un des états de fonctionnement possibles du processeur. Le dispositif comprend des moyens (41) de sélection d'un nombre prédéterminé d'adresses de déroutement parmi celles stockées dans les moyens (40) de stockage, de façon à sélectionner des adresses associées à l'état de fonctionnement courant du processeur. Les moyens (31) de comparaison comparent l'adresse dans le compteur programme (32) avec les adresses sélectionnées.

Fig. 4

EP 0 883 062 A1

## Description

Le domaine de l'invention est celui de la rectification des erreurs de programme dans un processeur. Plus précisément, l'invention concerne un dispositif de retouche du programme de commande dans un processeur.

Les processeurs ou microprocesseurs utilisés actuellement effectuent leurs opérations selon les instructions d'un programme de commande (ou code), se trouvant généralement dans une mémoire morte ou permanente du type ROM. Ce programme de commande est "masqué", c'est-à-dire réalisé à la fabrication du circuit intégré par la technique du masquage.

Il peut arriver que par suite d'erreurs dans certaines instructions du programme de commande se trouvant en mémoire morte, ou parce que le programme de commande nécessite des modifications, on veuille effectuer une ou plusieurs retouches, consistant chacune à remplacer l'instruction ou la suite d'instructions erronées ou modifiées par une routine de remplacement (aussi appelée "patch", selon la terminologie anglaise).

Si le programme de commande se trouvait emmagasiné dans une mémoire à accès direct ou RAM ou encore dans une mémoire morte du type EPROM, un remplacement matériel serait bien entendu possible. Mais dans le cas présent, du fait que le programme de commande se trouve en mémoire morte (masquée), un tel remplacement matériel est impossible.

En fait, classiquement, la retouche d'un programme de commande se trouvant dans une mémoire ROM s'effectue par déroutement du programme de commande en cours d'exécution vers une routine de programme corrigée ou modifiée (ou patch), stockée dans une mémoire RAM se trouvant généralement à l'extérieur de la puce supportant le processeur et la mémoire ROM.

Selon une technique connue, des instructions de branchement sont insérées à intervalles réguliers dans le programme de commande. L'exécution de chaque instruction de branchement revient à dérouter (premier saut) l'exécution du programme de commande vers une adresse, située en mémoire RAM, où se trouve une instruction de saut (second saut) :

- soit à l'adresse d'une routine de retouche, dans le cas où certaines des instructions du programme de commande qui suivent l'instruction de branchement comportent des erreurs ou doivent être modifiées,
- soit à une adresse de retour dans le programme de commande, juste à la suite de l'adresse de l'instruction de branchement, en l'absence d'erreurs.

En d'autres termes, l'adresse de chaque instruction de branchement constitue une adresse de déroutement prédéfinie et correspond à un double saut obligatoire.

Cette technique connue présente plusieurs inconvénients. Tout d'abord, elle augmente les contraintes temps réel du programme de commande puisqu'un double saut doit être exécuté à chaque adresse de déroutement, qu'il y ait ou non une routine de retouche à exécuter. De plus, elle nécessite des tailles de mémoire RAM importantes si l'on veut disposer d'un grand nombre d'adresses de déroutement au sein du programme de commande, du fait que chaque routine de retouche stockée en mémoire RAM comporte non seulement les instructions corrigées ou modifiées mais également la copie de l'ensemble du segment de programme situé entre l'adresse de déroutement concernée et l'adresse des instructions à corriger ou à modifier.

Afin de pallier les inconvénients de cette technique connue, il a été proposé un dispositif de retouche de programme de commande comprenant notamment :

- des moyens de stockage d'une pluralité d'adresses de déroutement, associées chacune à l'adresse de l'une des routines de retouche;
- des moyens de comparaison de l'adresse du programme de commande contenue dans le compteur programme avec chacune des adresses de déroutement contenues dans les moyens de stockage;
- des moyens de déroutement du programme de commande, en cas de comparaison positive par les moyens de comparaison, vers la routine de retouche dont l'adresse est associée à l'adresse de déroutement ayant fait l'objet de la comparaison positive.

Le fonctionnement de ce dispositif connu est le suivant : on détermine à chaque cycle d'instruction si l'instruction en cours d'exécution est associée à l'une des adresses de déroutement, et sur détection d'une adresse de déroutement, la logique du dispositif modifie, dans le compteur programme, l'adresse courante par l'adresse d'une routine de retouche.

Ce dispositif connu présente plusieurs avantages par rapport à la technique connue précitée. Notamment, il permet de faire des retouches à n'importe quelle adresse du programme de commande (puisqu'il est possible de choisir les adresses de déroutement stockées dans les moyens de stockage), tout en minimisant la taille de la mémoire RAM utilisée pour faire ces retouches (puisque les routines de retouches ne comprennent que les instructions corrigées ou modifiées, et les moyens de stockage des adresses de déroutement n'occupent que peu de place mémoire).

Toutefois, tel qu'il est conçu aujourd'hui, ce dispositif connu n'est pas aussi performant que souhaité puisqu'il ne permet d'apporter qu'un nombre limité de corrections au programme de commande.

En effet, afin de garantir la vitesse de fonctionnement du processeur et limiter la surface de silicium nécessaire, le nombre d'adresses de déroutement avec lesquelles les moyens de comparaison peuvent comparer l'adresse contenue dans le compteur de programme doit obligatoirement être limité.

Ainsi, on ne dispose actuellement que d'un faible nombre (par exemple huit) de possibilités de correction. En d'autres termes, seulement quelques routines de retouche peuvent être utilisées avec un même programme de commande. Or il est fréquent que l'on souhaite apporter un nombre plus élevé de corrections ou modifications au programme de commande.

L'invention a notamment pour objectif de pallier cet inconvénient majeur du dispositif connu précité.

Plus précisément, l'un des objectifs de la présente invention est de fournir un dispositif de retouche de programme de commande dans un processeur, permettant d'augmenter le nombre de corrections ou modifications pouvant être apportées au programme de commande, sans pour autant nécessiter une augmentation de la puissance de fonctionnement du processeur.

Cet objectif, ainsi que d'autres qui apparaîtront par la suite, est atteint selon l'invention à l'aide d'un dispositif de retouche de programme de commande dans un processeur, du type dans lequel le processeur exécute un programme de commande stocké dans une mémoire permanente et a accès à une pluralité de routines de retouche destinées chacune à être exécutée à la place d'une suite d'au moins une instruction dudit programme de commande, ledit dispositif comprenant :

- des moyens de stockage d'une pluralité d'adresses de déroutement, associées chacune à l'adresse de l'une des routines de retouche :
- des moyens de comparaison de l'adresse du programme de commande contenue dans le compteur programme, avec des adresses de déroutement contenues dans lesdits moyens de stockage :
- des moyens de déroutement du programme de commande, en cas de comparaison positive par lesdits moyens de comparaison, vers la routine de retouche dont l'adresse est associée à l'adresse de déroutement ayant fait l'objet de la comparaison positive,

    caractérisé en ce que chaque adresse de déroutement est également associée à l'un des états de fonctionnement possibles dudit processeur,

    en ce que ledit dispositif comprend en outre des moyens de sélection d'un nombre prédéterminé d'adresses de déroutement parmi celles stockées dans lesdits moyens de stockage, de façon que les adresses de déroutement sélectionnées soient celles associées à l'état de fonctionnement courant dudit processeur,

    et en ce que lesdits moyens de comparaison comparent l'adresse contenue dans le compteur programme uniquement avec lesdites adresses de déroutement sélectionnées.

Le principe général de l'invention consiste donc à sélectionner de façon dynamique, en fonction de l'état de fonctionnement courant du processeur, les routines de retouche qui peuvent effectivement être utilisées. En d'autres termes, à un instant donné, seules certaines des adresses de déroutement (dites adresses de déroutement sélectionnées) sont comparées à l'adresse contenue dans le compteur programme et peuvent être exécutées en cas de comparaison positive.

L'inventeur est parti du constat que la plupart du temps, une routine de retouche n'est utilisée que dans un état de fonctionnement particulier du processeur. Par conséquent, en ne sélectionnant pas cette routine de retouche lorsque le processeur n'est pas dans cet état de fonctionnement particulier, on évite aux moyens de comparaison d'effectuer une comparaison inutile.

Le dispositif de la présente invention, qui conserve tous les avantages du dispositif connu précité, est en outre beaucoup plus performant puisqu'il permet, à ressources matérielles et conditions de fonctionnement égales, de disposer d'un nombre plus élevé de routines de retouche.

A titre de comparaison, si l'on suppose qu'à un instant donné, le dispositif de la présente invention et le dispositif connu précité sont tous les deux capables de gérer N adresses de déroutement distinctes (en général, N = 8), le nombre total d'adresses de déroutement pouvant être gérées sur toute la durée d'exécution du programme de commande est :

- aussi égal à N pour le dispositif connu précité, puisque dans ce cas les adresses de déroutement sont figées;
- supérieur à N pour le dispositif de la présente invention, puisque plusieurs jeux de N adresses de déroutement peuvent être sélectionnés. Dans ce cas, la valeur maximale du nombre total d'adresses de déroutement est : $N_{max} = N \times E$, où E est le nombre d'états de fonctionnement distincts que peut présenter le processeur.

De façon avantageuse, chaque état de fonctionnement possible du processeur correspond à un mode de fonctionnement distinct ou à une phase de fonctionnement distincte.

Chaque mode, ou phase respectivement, de fonctionnement correspond à l'exécution d'une partie, ou sous-partie respectivement, du programme de commande. Ces parties ou sous-parties sont généralement exclusives entre elles au cours du temps.

Préférentiellement, lesdits moyens de stockage comprennent une première table associant à chaque adresse de déroutement, l'adresse de l'une des routines de retouche et l'un des états de fonctionnement possibles dudit processeur.

De façon préférentielle, lesdits moyens de sélection comprennent une seconde table stockant lesdites adresses de déroutement sélectionnées.

Cette seconde table assure essentiellement la même fonction que l'unique table du dispositif de l'art antérieur. On rappelle en effet que, dans l'art antérieur, une seule table est nécessaire puisque les possibilités de retouches sont figées. Au contraire, selon l'invention, les possibilités de retouches sont variables, ceci étant par exemple réalisé en modifiant de façon dynamique le contenu de la seconde table avec des éléments de la première table.

Avantageusement, ladite seconde table associe à chaque adresse de déroutement sélectionnée l'adresse de l'une des routines de retouche.

De façon avantageuse, le contenu de ladite première table et/ou celui de ladite seconde table est modifié sous le contrôle d'un autre processeur.

De cette façon, on limite la taille mémoire des moyens de stockage (mémoire RAM en général). L'autre processeur est par exemple un micro-contrôleur.

De façon avantageuse, du fait que ledit programme de commande comprend une portion de code de détection de changement d'état, exécutée avant chaque changement de l'état de fonctionnement courant du processeur, lesdits moyens de sélection comprennent une portion de code supplémentaire destinée à être exécutée par le processeur après l'exécution de ladite portion de code de détection de changement d'état, l'exécution de ladite portion de code supplémentaire assurant ladite sélection d'adresses de déroutement en fonction de l'état de fonctionnement courant du processeur.

Ainsi, avant chaque passage à un nouvel état de fonctionnement du processeur, une nouvelle sélection d'adresses de déroutement est effectuée, qui est adaptée à ce nouvel état de fonctionnement.

Dans un premier mode de réalisation particulier de l'invention, ladite portion de code supplémentaire est comprise dans ledit programme de commande, dans ou à la suite de ladite portion de code de détection de changement d'état.ladite portion de code supplémentaire est comprise dans ledit programme de commande, dans ou à la suite de ladite portion de code de détection de changement d'état.

Ce premier mode de réalisation correspond essentiellement au cas où la mise en oeuvre de l'invention est décidée dès la conception du programme de commande. En effet, dans ce cas, la portion de code supplémentaire fait partie du programme de commande.

Dans un second mode de réalisation particulier de l'invention, ladite portion de code supplémentaire est comprise dans une routine de retouche toujours sélectionnée et dont l'adresse est associée à une adresse de déroutement située, au sein du programme de commande, dans ou à la suite de ladite portion de code de détection de changement d'état.

Ce second mode de réalisation correspond essentiellement au cas où la mise en oeuvre de l'invention n'est décidée qu'après la conception du programme de commande. En effet, dans ce cas, la portion de code supplémentaire se trouve dans une routine de retouche et ne fait pas partie du programme de commande.

De façon avantageuse, au moins une desdites adresses de déroutement sélectionnées est sélectionnée quel que soit l'état de fonctionnement courant dudit processeur.

Par exemple, une adresse de déroutement est sélectionnée en permanence si elle est associée à l'adresse d'une routine de retouche permettant de corriger ou modifier une partie (ou une sous-partie) commune du programme de commande, c'est-à-dire une partie (ou une sous-partie) susceptible d'être exécutée quel que soit l'état de fonctionnement du processeur.

Dans un mode de réalisation préférentiel de l'invention, ledit dispositif comprend au moins un ensemble d'au moins deux routines de retouches pouvant s'autoactiver, dont une routine de retouche de départ, chaque ensemble étant tel que :

- la routine de retouche de départ est toujours la première routine de retouche sélectionnée parmi les routines de retouche dudit ensemble,
- chaque routine de retouche dudit ensemble comprend des instructions supplémentaires destinées, lors de leur exécution, à permettre auxdits moyens de sélection de sélectionner à la place de ladite routine de retouche une autre routine de retouche dudit ensemble.

Ainsi, un ensemble de routines de retouche qui s'autoactivent permet une action corrective en plusieurs parties sur le programme de commande.

On profite avantageusement du fait que certaines routines de retouche peuvent se succéder les unes aux autres. En s'autoactivant, elles n'utilisent qu'une ressource matérielle. En d'autres termes, prises toutes ensemble, elles ne correspondent à la sélection que d'une seule adresse de déroutement, qui est modifiée lors de l'activation d'une nouvelle routine de retouche par la routine de retouche précédente.

De plus, cette technique d'autoactivation est très avantageuse en termes de place mémoire. En effet, un ensemble de routines de retouche permet de remplacer une unique routine de retouche qui comporterait non seulement les instructions corrigées ou modifiées que contiennent les routines de retouche de cet ensemble mais également la copie de chacun des segments de programme situé entre deux des routines de retouche de cet ensemble.

De façon avantageuse, la dernière routine de retouche exécutée dudit ensemble comprend des instructions supplémentaires qui, lorsqu'elles sont exécutées, permettent auxdits moyens de sélection de sélectionner la routine de retouche de départ à la place de ladite dernière routine de retouche.

Ainsi, on garantit le contexte initial quand on exécute la dernière routine de retouche de l'ensemble. De cette façon, l'ensemble des routines de retouches peut être exécuté plusieurs fois successivement. Ceci correspond notamment au cas d'un mode ou d'une phase exécuté(e) de façon itérative.

Avantageusement, les routines de retouche d'un même ensemble sont associées à un même état de fonctionnement dudit processeur.

En d'autres termes, dans ce cas particulier, les routines de retouche d'un même ensemble visent à corriger ou modifier des instructions d'une même partie (ou sous-partie) du programme de commande.

De façon avantageuse, au moins un ensemble inclut au moins une routine de retouche comprenant des instructions de test telles que, en fonction du résultat dudit test, ladite routine constitue :

- soit une dernière routine de retouche pour ledit ensemble,
- soit une retouche de retouche précédant une autre routine de retouche dudit ensemble.

Ainsi, en fonction des résultats de test(s) effectué(s) dans une ou plusieurs routines de retouche, différentes séquences d'exécution peuvent correspondre à un même ensemble de routines de retouche.

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :

- la figure 1 présente un schéma synoptique rappelant le fonctionnement classique d'un processeur ;
- la figure 2 est un schéma synoptique explicitant le principe de déroutement mis en oeuvre dans le dispositif de retouche selon l'invention ;
- la figure 3 présente un schéma synoptique du dispositif de retouche selon l'art antérieur ;
- la figure 4 présente un schéma synoptique d'un mode de réalisation particulier du dispositif de retouche selon l'invention;
- les figures 5 et 6 présentent un mode de réalisation particulier des tables I et II respectivement apparaissant sur la figure 3;
- la figure 7 est un tableau présentant un exemple de sélection de routines de retouche en fonction de l'état de fonctionnement du processeur;
- la figure 8 présente un schéma synoptique explicitant le principe d'autoactivation de routines de retouche selon l'invention; et
- la figure 9 présente un organigramme simplifié explicitant la possibilité d'effectuer un test au sein d'une des routines de retouches s'autoactivant.

L'invention concerne donc un dispositif de retouche de programme de commande dans un processeur.

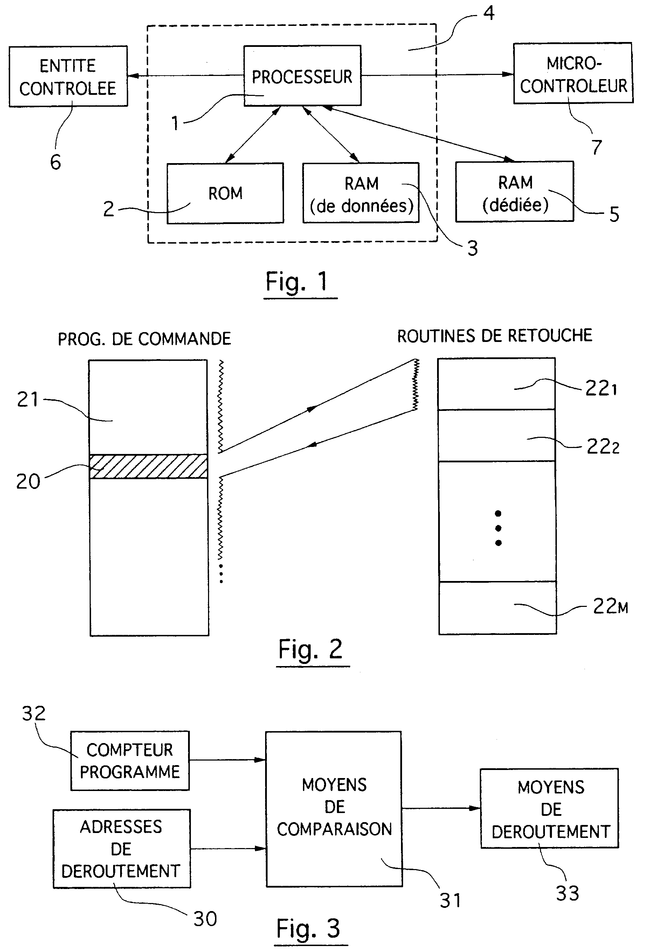

De façon classique, et comme présenté sur la figure 1, un processeur 1 exécute un programme de commande stocké dans une mémoire permanente (ROM) 2. Il utilise en outre une mémoire vive (RAM) de données 3, et éventuellement une mémoire RAM dédiée 5. Généralement, le processeur 1, la mémoire ROM 2 et la mémoire RAM de données 3 se trouvent sur une même puce 4, tandis que la mémoire RAM dédiée 5 est externe à cette puce 4. Le processeur 1 peut contrôler une ou plusieurs entités 6 (par exemple un composant d'émission/réception radio) et être lui-même contrôlé par un autre processeur (par exemple un microprocesseur) 7. Il est clair que d'autres configurations peuvent être envisagées, la présente invention pouvant être mise en oeuvre avec chacune d'entre elles.

La figure 2 est un schéma synoptique explicitant le principe de déroutement mis en oeuvre dans le dispositif de retouche selon l'invention.

On rappelle que ce principe de déroutement consiste à exécuter une routine de retouche $22_1$ (ou patch) lorsqu'une instruction ou une suite d'instructions 20 du programme de commande 21 est erronée ou doit être modifiée. La routine de retouche exécutée $22_1$ est choisie de façon adéquate parmi une pluralité de routines de retouche $22_1$ à $22_M$, stockée par exemple dans la mémoire RAM dédiée 5. La taille de chaque routine de retouche est adaptée à la correction ou modification qu'elle apporte.

Comme présenté sur le schéma synoptique de la figure 3, le dispositif de retouche selon l'art antérieur comprend :

- des moyens 30 de stockage (par exemple une pile de registres) des adresses de déroutement, associées chacune à l'adresse de l'une des routines de retouche ;
- des moyens 31 de comparaison de l'adresse du programme de commande contenue dans le compteur programme 32, avec chacune des adresses de déroutement contenues dans les moyens 30 de stockage;
- des moyens 33 de déroutement du programme de commande, en cas de comparaison positive par les moyens 31 de comparaison, vers la routine de retouche dont l'adresse (dite adresse d'arrivée) est associée à l'adresse de déroutement (dite adresse de départ) ayant fait l'objet de la comparaison positive.

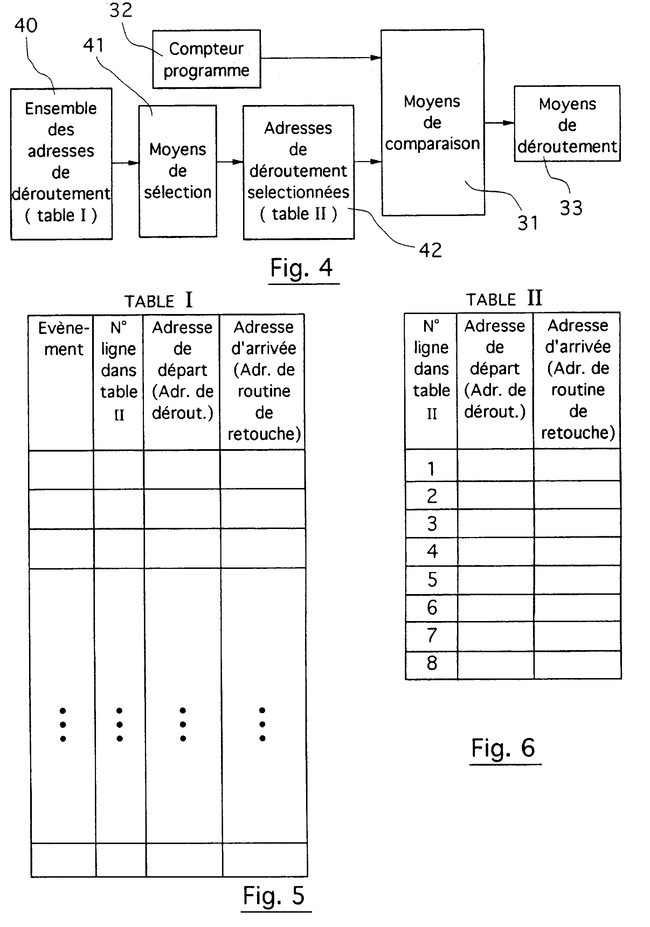

On présente maintenant, en relation avec le schéma synoptique de la figure 4, un mode de réalisation particulier du dispositif de retouche selon l'invention. Ce dernier comprend des moyens 31 de comparaison et des moyens 33 de déroutement identiques à ceux compris dans le dispositif de l'art antérieur (cf fig.3). En revanche, il comprend :

- des moyens 40 de stockage de l'ensemble des adresses de déroutement, par exemple sous la forme d'une première table (notée table I par la suite) ;
- des moyens 41 de sélection de certaines adresses de déroutements, de façon que les adresses de déroutement sélectionnées soient celles associées à l'état de fonctionnement courant du processeur :

- des moyens 42 de stockage des adresses de déroutement sélectionnées, par exemple sous la forme d'une seconde table (notée table II par la suite).

Les tables I et II sont par exemple stockées en mémoire RAM de données 3.

Les moyens 31 de comparaison comparent l'adresse contenue dans le compteur programme 32 uniquement aux adresses de déroutement sélectionnées de la table II. Ainsi, selon la présente invention, l'adresse contenue dans le compteur programme 32 n'est pas comparée avec toutes les adresses de déroutement possibles de la table I.

Afin que les moyens 41 de sélection puissent effectuer une sélection d'adresses de déroutement en fonction de l'état de fonctionnement courant du processeur, chaque adresse de déroutement est également associée, dans la table I, à l'un des états de fonctionnement possibles du processeur.

Comme présenté sur la figure 5, dans un mode de réalisation particulier, la table I comprend quatre colonnes concernant respectivement :

- un événement entraînant le passage à un état de fonctionnement prédéterminé;
- un numéro de ligne dans la table II;
- une adresse de départ, c'est-à-dire une adresse de déroutement dans le programme de commande :
- une adresse d'arrivée, c'est-à-dire une adresse d'une routine de retouche.

Un même événement peut être associé jusqu'à N numéros de ligne distincts et donc N couples d'adresses distincts, avec N le nombre total de lignes de la table II (par exemple N = 8). Ceci signifie que pour un événement donné, c'est-à-dire pour un état de fonctionnement donné du processeur, il existe jusqu'à N possibilités de correction ou modification du programme de commande.

Il existe de nombreux événements. Chacun d'entre eux correspond à la réception d'informations modifiant le déroulement du programme de commande. Il s'agit par exemple d'informations envoyées par le micro-contrôleur 7 ou l'entité contrôlée 6.

Chaque état de fonctionnement possible du processeur correspond par exemple à un mode de fonctionnement distinct du processeur, tel que par exemple le mode acquisition, le mode poursuite, etc. Chaque mode de fonctionnement correspond à l'exécution d'une portion particulière du programme de commande.

On peut également envisager de faire correspondre à chaque état de fonctionnement possible du processeur une phase de fonctionnement distincte. En effet, un mode de fonctionnement du processeur peut généralement être lui-même divisé en phases de fonctionnement successives. Chaque phase de fonctionnement correspond à l'exécution d'une sous-portion particulière du programme de commande. Il est clair que de cette façon, on augmente le nombre total de corrections/modifications possibles puisque le contenu de la table II est modifié plus souvent (plusieurs fois au cours d'un même mode de fonctionnement).

On peut même envisager de combiner les deux définitions précitées, chaque état de fonctionnement possible du processeur correspondant, selon les cas, à un mode ou à une phase de fonctionnement distinct du processeur.

Comme présenté sur la figure 6, dans un mode de réalisation particulier, la table II comprend trois colonnes des quatre colonnes de la table I, à savoir celles concernant :

- un numéro de ligne dans la table II;
- une adresse de départ, c'est-à-dire une adresse de déroutement;
- une adresse d'arrivée, c'est-à-dire une adresse d'une routine de retouche.

Ainsi, lorsqu'un événement correspondant à un changement de l'état de fonctionnement courant du processeur se produit, les moyens 41 de sélection :

- prennent connaissance de cet événement,
- lisent dans la table I le ou les couples (adresses de départ, adresse d'arrivée) associés à cet événement, ainsi que pour chacun de ces couples un numéro de ligne associé dans la table II,
- recopient dans la table II, au numéro de ligne adéquat, chaque couple (adresses de départ, adresse d'arrivée) lu.

Ce fonctionnement des moyens 41 de sélection correspond à l'exécution par le processeur d'une portion de code supplémentaire, après l'exécution d'une portion de code de détection de changement d'état. On rappelle en effet que le programme de commande comprend une portion de code de détection de changement d'état, exécutée avant chaque changement de l'état de fonctionnement courant du processeur.

La portion de code supplémentaire peut être comprise :

- soit dans le programme de commande, dans ou à la suite de la portion de code de détection de changement d'état;
- soit dans une routine de retouche toujours sélectionnée (dite routine de gestion dynamique des routines de retouche) et dont l'adresse est associée à une adresse de déroutement située, au sein du programme de commande, dans ou à la suite de la portion de code de détection de changement d'état.

On peut prévoir qu'une adresse de déroutement soit toujours sélectionnée, par exemple si la routine de retouche correspondante permet une correction ou une modification dans une partie du programme de commande commune à tous les modes de fonctionnements. Il est à noter que la routine de gestion dynamique des routines de retouche, si elle existe, est du type possédant une adresse (adresse d'arrivée) associée à une adresse de déroutement (adresse de départ) toujours sélectionnée.

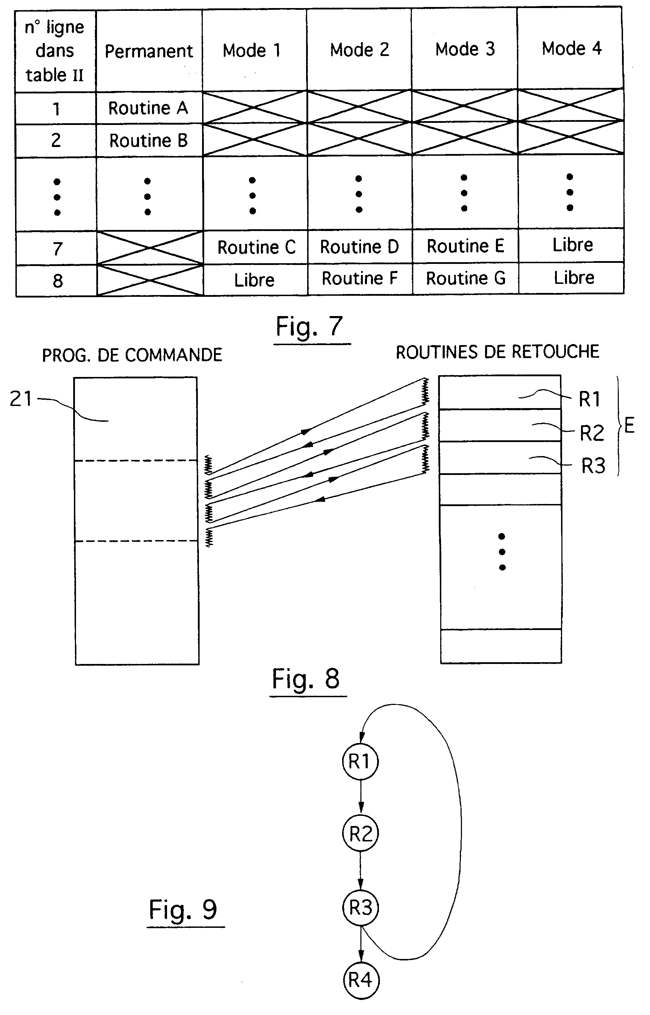

La figure 7 est un tableau présentant un exemple de sélection de routines de retouche en fonction de l'état de fonctionnement du processeur. Dans cet exemple purement illustratif, deux routines A et B peuvent être exécutées en permanence. La routine C peut notamment être exécutée lorsque le processeur est dans un premier mode de fonctionnement (mode n°1). Les routines D et F peuvent notamment être exécutées lorsque le processeur est dans un second mode de fonctionnement (mode n°2). Les routines E et G peuvent notamment être exécutées lorsque le processeur est dans un troisième mode de fonctionnement (mode n°3). Enfin, lorsque le processeur est dans un quatrième mode de fonctionnement (mode n°4), il ne nécessite aucune correction ou complément.

Afin de réduire la place mémoire occupée par la table I, on peut prévoir que son contenu soit modifié au cours du temps par le micro-contrôleur 7 (ou plus généralement par un autre processeur), et non pas simplement téléchargé au démarrage de la machine.

On présente maintenant, en relation avec les figures 8 et 9, le principe d'autoactivation de routines de retouche selon l'invention.

Sur le schéma synoptique de la figure 8, on présente à titre d'exemple un ensemble E de trois routines de retouches R1, R2 et R3 pouvant s'autoactiver. L'une des routines de retouche, dite routine de retouche de départ R1, est toujours la première routine de retouche sélectionnée. Chaque routine de retouche de l'ensemble comprend des instructions supplémentaires destinées, lors de leur exécution, à permettre aux moyens 41 de sélection de sélectionner à la place de la routine de retouche une autre routine de retouche de l'ensemble. Ainsi lorsque la routine de départ R1 est exécutée, cela permet aux moyens 41 de sélection de remplacer, dans la table II, l'adresse de déroutement correspondant à la routine R1 par l'adresse de déroutement correspondant à la routine R2. De même avec la routine R2 vis-à-vis de la routine R3. En d'autres termes, la routine R2 est sélectionnée à la place de la routine R1. De même avec la routine R2 vis-à-vis de la routine R3, lorsque la routine R2 est exécutée.

On comprend donc que les adresses de déroutement correspondant aux routines de retouche R1, R2 et R3 d'un même ensemble E, occupent successivement la même ligne dans la table II. Généralement, l'autoactivation s'effectue au cours d'un même état de fonctionnement du processeur.

Si l'ensemble E de routines de retouche est susceptible d'être exécuté plusieurs fois successivement au cours d'un même mode ou d'une même phase de fonctionnement, il convient de s'assurer que la dernière routine de retouche exécutée R3 de l'ensemble E comprend des instructions supplémentaires qui, lorsqu'elles sont exécutées, permettent aux moyens 41 de sélection de sélectionner à nouveau la routine de retouche de départ R1 à la place de cette dernière routine de retouche R3. En d'autres termes, il convient de restituer le contexte pour permettre l'itération.

On peut prévoir la possibilité d'effectuer un test au sein d'une (ou plusieurs) des routines de retouches s'autoactivant. Ainsi, en fonction du résultat du test, la séquence de routines de retouche qui s'autoactivent n'est pas toujours la même. En d'autres termes, la routine comportant le test peut constituer soit la dernière routine de retouche, soit une retouche de retouche intermédiaire.

Dans l'exemple de la figure 9, la routine R3 comporte un test. Deux séquences sont possibles, à savoir : R1-R2-R3-R4-R1-... ou R1-R2-R3-R1-...

Il est clair qu'à la lecture de ce qui précède, l'homme du métier pourra, sans sortir du cadre de la présente invention, concevoir des organigrammes de séquences de routines de retouche s'autoactivant beaucoup plus complexes.

**Revendications**

1. Dispositif de retouche de programme de commande dans un processeur (1), du type dans lequel le processeur exécute un programme de commande (21) stocké dans une mémoire permanente (2) et a accès à une pluralité de routines de retouche ($22_1$ à $22_M$) destinées chacune à être exécutée à la place d'une suite d'au moins une instruction dudit programme de commande, ledit dispositif comprenant :

    - des moyens de stockage d'une pluralité d'adresses de déroutement, associées chacune à l'adresse de l'une des routines de retouche :
    - des moyens (31) de comparaison de l'adresse du programme de commande contenue dans le compteur programme (32), avec des adresses de déroutement contenues dans lesdits moyens de stockage ;
    - des moyens (33) de déroutement du programme de commande, en cas de comparaison positive par lesdits moyens (31) de comparaison, vers la routine de retouche dont l'adresse est associée à l'adresse de déroutement ayant fait l'objet de la comparaison positive,

        caractérisé en ce que chaque adresse de déroutement est également associée à l'un des états de fonctionnement possibles dudit processeur,

en ce que ledit dispositif comprend en outre des moyens (41) de sélection d'un nombre prédéterminé d'adresses de déroutement parmi celles stockées dans lesdits moyens (40) de stockage, de façon que les adresses de déroutement sélectionnées soient celles associées à l'état de fonctionnement courant dudit processeur,

et en ce que lesdits moyens (31) de comparaison comparent l'adresse contenue dans le compteur programme uniquement avec lesdites adresses de déroutement sélectionnées.

2. Dispositif selon la revendication 1, caractérisé en ce que chaque état de fonctionnement possible du processeur (1) correspond à un mode de fonctionnement distinct ou à une phase de fonctionnement distincte.

3. Dispositif selon l'une quelconque des revendications 1 et 2, caractérisé en ce que lesdits moyens de stockage comprennent une première table (40, table I; fig.5) associant à chaque adresse de déroutement, l'adresse de l'une des routines de retouche et l'un des états de fonctionnement possibles dudit processeur.

4. Dispositif selon l'une quelconque des revendications 1 à 3, caractérisé en ce que lesdits moyens (41) de sélection comprennent une seconde table (42, table II; fig.6) stockant lesdites adresses de déroutement sélectionnées.

5. Dispositif selon la revendication 4, caractérisé en ce que ladite seconde table associe à chaque adresse de déroutement sélectionnée l'adresse de l'une des routines de retouche.

6. Dispositif selon l'une quelconque des revendications 3 à 5, caractérisé en ce que le contenu de ladite première table et/ou celui de ladite seconde table est modifié sous le contrôle d'un autre processeur (7).

7. Dispositif selon l'une quelconque des revendications 1 à 6, ledit programme de commande comprenant une portion de code de détection de changement d'état, exécutée avant chaque changement de l'état de fonctionnement courant du processeur,

caractérisé en ce que lesdits moyens (41) de sélection comprennent une portion de code supplémentaire destinée à être exécutée par le processeur après l'exécution de ladite portion de code de détection de changement d'état, l'exécution de ladite portion de code supplémentaire assurant ladite sélection d'adresses de déroutement en fonction de l'état de fonctionnement courant du processeur.

8. Dispositif selon la revendication 7, caractérisé en ce que ladite portion de code supplémentaire est comprise dans ledit programme de commande, dans ou à la suite de ladite portion de code de détection de changement d'état.

9. Dispositif selon la revendication 7, caractérisé en ce que ladite portion de code supplémentaire est comprise dans une routine de retouche toujours sélectionnée et dont l'adresse est associée à une adresse de déroutement située, au sein du programme de commande, dans ou à la suite de ladite portion de code de détection de changement d'état.

10. Dispositif selon l'une quelconque des revendications 1 à 9, caractérisé en ce qu'au moins une desdites adresses de déroutement sélectionnées est sélectionnée quel que soit l'état de fonctionnement courant dudit processeur.

11. Dispositif selon l'une quelconque des revendications 1 à 10, caractérisé en ce qu'il comprend au moins un ensemble (E) d'au moins deux routines de retouches (R1, R2, R3) pouvant s'autoactiver, dont une routine de retouche de départ (R1), chaque ensemble étant tel que :

- la routine de retouche de départ (R1) est toujours la première routine de retouche sélectionnée parmi les routines de retouche dudit ensemble,
- chaque routine de retouche dudit ensemble comprend des instructions supplémentaires destinées, lors de leur exécution, à permettre auxdits moyens de sélection de sélectionner à la place de ladite routine de retouche une autre routine de retouche dudit ensemble.

12. Dispositif selon la revendication 11, caractérisé en ce que la dernière routine de retouche exécutée (R3) dudit ensemble comprend des instructions supplémentaires qui, lorsqu'elles sont exécutées, permettent auxdits moyens (41) de sélection de sélectionner la routine de retouche de départ (R1) à la place de ladite dernière routine de retouche (R3).

13. Dispositif selon l'une quelconque des revendications 11 et 12, caractérisé en ce que les routines de retouche d'un même ensemble (E) sont associées à un même état de fonctionnement dudit processeur.

14. Dispositif selon l'une quelconque des revendications 11 à 13, caractérisé en ce qu'au moins un ensemble inclut au moins une routine de retouche (R3) comprenant des instructions de test telles que, en fonction du résultat dudit test, ladite routine constitue

- soit une dernière routine de retouche pour ledit ensemble,
- soit une retouche de retouche précédant une autre routine de retouche (R4) dudit ensemble.

ENTITE
CONTROLEE

PROCESSEUR

MICRO-
CONTROLEUR

4

1

6

7

ROM

RAM
(de données)

RAM
(dédiée)

2

3

5

## Fig. 1

PROG. DE COMMANDE

ROUTINES DE RETOUCHE

21

20

$22_1$

$22_2$

$22_M$

## Fig. 2

32

COMPTEUR
PROGRAMME

MOYENS
DE
COMPARAISON

MOYENS
DE
DEROUTEMENT

ADRESSES
DE
DEROUTEMENT

30

31

33

## Fig. 3

Fig. 4

## TABLE I

| Evène-ment | N° ligne dans table II | Adresse de départ (Adr. de dérout.) | Adresse d'arrivée (Adr. de routine de retouche) |
|---|---|---|---|
|  |  |  |  |
|  |  |  |  |
|  |  |  |  |
|  |  |  |  |
| ⋮ | ⋮ | ⋮ | ⋮ |
|  |  |  |  |

Fig. 5

## TABLE II

| N° ligne dans table II | Adresse de départ (Adr. de dérout.) | Adresse d'arrivée (Adr. de routine de retouche) |
|---|---|---|
| 1 |  |  |
| 2 |  |  |
| 3 |  |  |
| 4 |  |  |
| 5 |  |  |
| 6 |  |  |
| 7 |  |  |
| 8 |  |  |

Fig. 6

| n° ligne dans table II | Permanent | Mode 1 | Mode 2 | Mode 3 | Mode 4 |
|---|---|---|---|---|---|
| 1 | Routine A | | | | |
| 2 | Routine B | | | | |
| ⋮ | ⋮ | ⋮ | ⋮ | ⋮ | ⋮ |
| 7 | | Routine C | Routine D | Routine E | Libre |
| 8 | | Libre | Routine F | Routine G | Libre |

## Fig. 7

PROG. DE COMMANDE                    ROUTINES DE RETOUCHE

21

R1
R2   } E
R3

## Fig. 8

## Fig. 9

R1
R2
R3
R4

Office européen
des brevets

**RAPPORT DE RECHERCHE EUROPEENNE**

Numéro de la demande

EP 98 40 1190

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US 4 802 119 A (HEENE ET AL.) 31 janvier 1989<br>* colonne 3, ligne 64 - colonne 4, ligne 7 *<br>* colonne 5, ligne 31 - ligne 51 *<br>--- | 1-14 | G06F11/00 |
| A | EP 0 553 733 A (SONY CORPORATION) 4 août 1993<br>* colonne 6, ligne 17 - ligne 39 *<br>--- | 1-14 | |
| A | EP 0 458 559 A (SCHLUMBERGER INDUSTRIES LIMITED) 27 novembre 1991<br>* colonne 5, ligne 37 - ligne 47 *<br>----- | 1-14 | |

**DOMAINES TECHNIQUES RECHERCHES (Int.Cl.6)**

G06F

Le présent rapport a été établi pour toutes les revendications

| Lieu de la recherche | Date d'achèvement de la recherche | Examinateur |
|---|---|---|
| LA HAYE | 28 août 1998 | Corremans, G |